# EUROPEAN PATENT APPLICATION

(11) **EP 1 628 245 A1**
(43) Date of publication of application: **22.02.2006**
(21) Application number: 04019484.7
(22) Date of filing: 17.08.2004
(51) Int. Cl.: G06K 19/077, G06K 19/07, H01Q 1/22, H01Q 1/32

(54) **Package, method for producing a package and a device for producing a package**

(71) Applicant: Sony DADC Austria AG, 5081 Anif (AT)
(72) Inventor: Maier, Johann, 5081 Anif (AT); Kronegger, Karl, 5081 Anif (AT); Reiter, Gottfried, 5081 Anif (AT); Kraushaar, Harald, 5081 Anif (AT)
(74) Representative: Müller - Hoffmann & Partner

(57) **Abstract**

The invention relates to a package (1) or package raw material comprising an electrically conductive layer (3) arranged on a base material (2) and a chip (5) connected to the electrically conductive layer (3), the electrically conductive layer (3) being configured as an antenna element for transferring data and/or energy, wherein the electrically conductive layer comprises a non-conductive portion (4). Further, the invention relates to a method for producing a package and a device for producing a package.

## Description

The present invention relates to a package, preferably of an optical data carrier such as a CD or DVD, comprising an electrically conductive layer. Further, the present invention relates to a method for producing such a package as well as a device for producing the package.

Generally, packages of goods, such as packages of CDs and DVDs or beverage boxes, are used to identify and protect the goods. The identification provided on a package is generally meant for human beings, but often also provided in a machine readable form, e.g. as a barcode that might be directly printed on the package or applied to the package in form of a sticker. Further, the package serves for the application of stickers that carry anti theft devices, such as small transponders. However, these machine readable information stickers and "transponder stickers" can be easily exchanged with other stickers or removed to circumvent the payment of the correct price for the respective good. Such an exchange is in particular easy and will not be recognized for similar looking goods, such as optical data carriers, e.g. audio CDs and video DVDs. In other words, security devices, which are placed on the CD/DVD case (which is also a kind of package itself) or the package thereof, e.g. the wrapping of the case, are bypassed and do not provide enough security for the stores.

Furthermore, it would be desirable to have a simple and cheap identification and communication means arranged directly on a package.

In view of the above, it is an object underlying the present invention to provide an improved package preferably having an additional security device/data device integrated on the package.

A further object of the present invention is to provide a method of producing a package having improved security/data characteristics and a device for producing such packages.

According to the present invention, this object is solved by a package, a method and a device having the features of independent claims 1, 11, 12 and 16, respectively. Preferred embodiments of the invention are defined in the respective dependent claims.

According to the inventive package, the package comprises an electrically conductive layer, which is arranged on a base material. Further, the package comprises a chip connected to the conductive layer. The conductive layer is configured as an antenna element for transferring data and/or energy between the chip and an external device. To enable this, the conductive layer comprises at least one non-conductive portion. Thus, according to the present invention, the electrically conductive layer is used as the antenna element. Therefore, according to the present invention, it is not necessary to provide a separate antenna element. In other words, the antenna element is an integrative part of the package and the antenna element is provided by parts existing in many packages anyway. Consequently, production costs of the inventive package can be significantly reduced. For example, the chip can be provided with specific circuits sending a signal, if the package is for example transported out of a store. Further, the chip can be provided such that, if a customer pays for the good at the cashier, a signal sent by the chip can be restrained or amended by the cashier, so that no alarm will be given when the customer leaves the shop. According to a preferred embodiment, the chip is an IC-element or a RFID-element (Radio Frequency Identification). The antenna element of such RFID-elements is the electrically conductive layer of the package. Thereby, active and passive RFID-elements can be used.

Preferably, the transfer of data and/or energy is an inductive transfer. To enable this function, the conductive layer preferably comprises one or several loops formed by the provision of the non-conductive portion. Thus, the antenna element has the shape of one open ring or a coil. The chip is connected to both ends of the open ring and is preferably arranged between the two ends of the open ring.

According to a further preferred embodiment of the present invention, the transfer of data and/or energy is a capacitive transfer, wherein the conductive layer is separated by the non-conductive portion into at least two parts.

Preferably, the non-conductive portion has a closed ring-like shape and separates the electrically conductive layer into two ring-like parts. More preferably, the two ring like parts are concentric to each other.

Alternatively, the non-conductive portion is configured as a straight line, which begins at one edge of the electrically conductive layer and ends at the opposite edge of the electrically conductive layer. That is, the whole conductive layer is used as antenna element. Thus, the non-conductive portion can be manufactured very easily and the two parts of the conductive layer are electrically not connected.

Further preferable, the chip is connected to the conductive layer by means of a conductive adhesive. Thus, an electrical connection between the chip and the electrically conductive layer can be easily provided at low costs. According to another preferred embodiment, a connection between the chip and the antenna element can be realized by means of mechanical contacts.

Further preferable, the package comprises a first electrically conductive layer and a second electrically conductive layer, wherein the second electrically conductive layer is arranged parallel to the first electrically conductive layer. Thereby, the first and/or the second electrically conductive layers are configured as an antenna element for transferring data and/or energy.

Preferably, the non-conductive portion has a width of less than 300 µm, preferably less than 100µm, further preferably approximately 75 µm.

The package is preferably a CD or a DVD or a SACD or a Blu-ray disc package.

According to the inventive method for producing a package comprising an electrically conductive layer arranged on a base material, the method comprises the steps of:
a) applying a metal material on the base material for providing the electrically conductive layer,
b) removing metal material of the electrically conductive layer for providing at least one non-conductive portion in the electrically conductive layer, and
c) fixing a chip to the electrically conductive layer, preferably by means of a conductive adhesive.

Alternatively, according to the inventive method for producing a package comprising an electrically conductive layer arranged on a base material, the method comprises the steps of:
a) removing metal material of an electrically conductive film for providing at least one non-conductive portion in the electrically conductive film,
b) applying the electrically conductive film with the at least one non-conductive portion on the base material for providing the electrically conductive layer, and
c) fixing a chip to the electrically conductive layer, preferably by means of a conductive adhesive.

Preferably, e.g. if the package is a beverage box, a surface layer, preferably a protective layer, such as a film or lacquer, is applied over the electrically conductive layer and the chip. It has to be noted, that preferably the thickness of the chip either has to be smaller than the thickness of the surface layer or that the chip is placed at least partly in a recess, formed in the base material of the package so that a protruding portion at the position of the chip can be prevented.

If the package is a multi-layer package, preferably the chip can be placed between two layers of the package and can be embedded into a bonding layer for bonding the two layers of the package together.

According to a further preferred method of the present invention, the metal material of the electrically conductive layer for providing the non-conductive portion is removed by means of a laser or a flat or rotary die cutter.

According to a further preferred embodiment of the inventive method, there is provided an additional step before the step of applying the metal, wherein the additional step is to place a line-like auxiliary element on the base material. The line-like auxiliary element is also covered with metal when applying the metal material. Then, the line-like auxiliary element is removed, thereby producing the non-conductive portion of the electrically conductive layer. For example the line-like auxiliary element may be a wire, a thread or an adhesive tape.

The inventive device for producing a package comprises a device for applying metal material for the electrically conductive layer on a base layer and a device for partially removing the electrically conductive layer for providing the at least one non-conductive portion.

Preferably, the device for partially removing the electrically conductive layer is a laser or a flat or rotary die cutter or a line-like element, which is removed after applying the electrically conductive layer on the basis layer. Again, the line-like auxiliary element may be a wire, a thread, an adhesive tape, etc.

The present invention can be used in different ways, depending on the design of the chip. For example, the present invention can be used as an anti-theft protection, as an identification means for point of sale terminals, as a protection against copying, or as a means for watching packaged goods in a supply chain or in ware housing.

Of course, the present invention in all its aspects set-out above applies also to package raw material with which a respective package can be assembled and to a method and device to produce package raw material that show the features set-out above for the method and device to produce a package.

All different aspects of the present invention as set-out above and further elucidated below might be combined in any way. The accompanying drawings, which are incorporated in and constitute a part of the specification, illustrate an exemplary embodiment of the invention and, together with a general description of the invention given above, and the detailed description of the embodiments given below, serve to explain the principles of the invention, wherein:
- **Fig. 1**: shows a simplified view elucidating a method and device for producing a package or package raw material according to the invention,
- **Fig. 2**: shows a simplified sectional view of a part of a package or package raw material according to the invention,
- **Fig. 3**: shows a simplified view of a package according to a first embodiment of the present invention,
- **Fig. 4**: shows a simplified view of a package according to a second embodiment of the present invention,
- **Fig. 5**: shows a simplified view of a package according to a third embodiment of the present invention,
- **Fig. 6**: shows a simplified view of a package according to a fourth embodiment of the present invention;
- **Fig. 7**: shows a simplified view of a package according to a fifth embodiment of the present invention,
- **Fig. 8**: shows a simplified view of a package according to a sixth embodiment of the present invention,
- **Fig. 9**: shows a simplified view of a package according to a seventh embodiment of the present invention,
- **Fig. 10**: shows a simplified view of a package according to an eighth embodiment of the present invention, and
- **Fig. 11**: shows a simplified sectional view of a part of a further package or package raw material according to the invention.

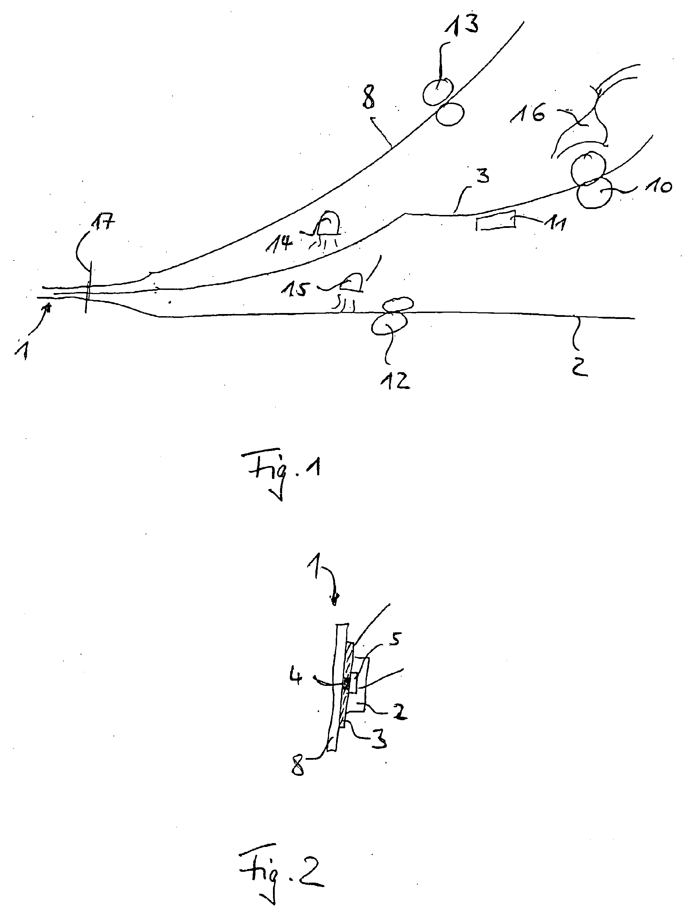

The illustration of Fig. 1, which shows a view elucidating a method and device for producing a package according to the invention, and the other figures of embodiments of packages according to the invention as well are in a very simplified way and only show the principles of the present invention.

Fig. 1 shows a principle view elucidating a method and device for producing a package according to the invention. In particular, in Fig. 1 the producing of the package raw material, such as film laminated board that comprises at least one conductive layer 3, e.g. a metal layer, is shown. Apart from a special die cutting, e.g. with a flat or rotary die cutter, or other removal of parts of the conductive layer 3, e.g. with a laser, to build at least one non-conductive portion 4 either before or after the conductive layer 3 is applied to a base material 2, such as a cardboard, paper, a foil, a plastic sheet, ..., so that the remaining conductive portion(s) of the conductive layer 3 can build an antenna, and a positioning and contacting of a chip 5, such as an IC, at a predetermined position on the conductive layer 3, no modification of the manufacturing process for the package raw material is necessary.

To build the package raw material, as shown in Fig. 1, a base material 2, such as a foil, cardboard or paper, passes through first guide rollers 12 that might incorporate an optional rotary die cutter to perforate the base material 2, to cut away parts thereof or to apply recesses onto the base material 2. After the passing through the first guide rollers 12 a first gluing unit 15 applies special glue onto the base material 2.

Further, a conductive layer 3, such as a metal foil, which is arranged on the side of the base material to which the special glue is applied, passes through a rotary die cutter 10 to cut away parts of the conductive layer 3 so as to build at least one non-conductive portion 4 therein. The parts of the conductive layer 3 that are cut away are removed by a suction device 16 that is arranged in the vicinity of the rotary die cutter 10. After the passing through the rotary die cutter 10, the conductive layer 3 passes along an IC placing unit 11 that places chips 5 onto the conductive layer 3 in predetermined positions. Thereafter, a second gluing unit 14 applies special glue onto the conductive layer 3 at the side that does not face the base material 2 in case the package raw material should comprise a further layer, e.g. a protective layer 8.

Fig. 1 shows this case of applying a protective layer 8 onto the conductive layer 3. The protective layer 8, such as a foil, cardboard or paper, passes through second guide rollers 13 that might incorporate an optional rotary die cutter to perforate the protective layer 8, to cut away parts thereof or to apply recesses onto the protective layer 8.

After the passing through the second guide rollers 13, the protective layer 8 (when applied), the conductive layer 3, which passed through the rotary die cutter 10, onto which chips 5 are applied and which is coated with special glue (if applicable), and the base material 2 which is coated with special glue pass through a pressing unit 17 that presses the single layers of the package raw material together so that they will properly stick to each other due to the special glue between the layers.

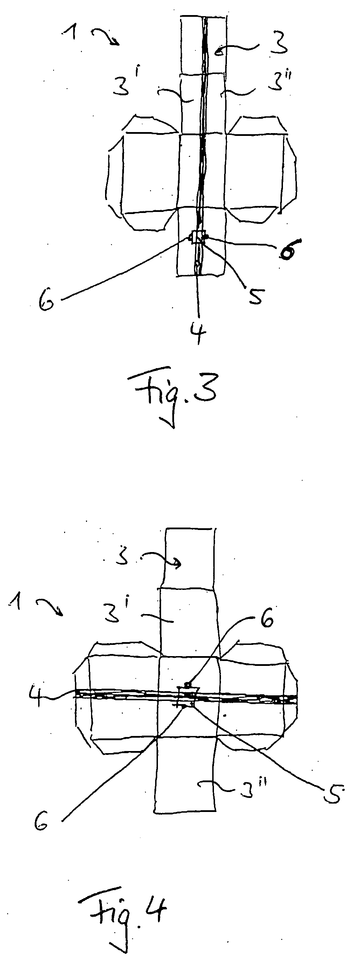

Fig. 2 shows a sectional view of a part of a package 1 or package raw material, in the following also referred to as package for the sake of simplicity, according to a first embodiment of the present invention. The package 1 comprises an electrically conductive layer 3, which is arranged on a base material 2. The electrically conductive layer 3 and the base material form the package 1 that might be a package of a CD or a DVD or a Blu-ray package or a food package such as a beverage box or the like, or a part of such packages, such as a cap or a lid.

Further, as shown in Fig. 2, the conductive layer 3 comprises a non-conductive portion 4. The non-conductive portion 4 is arranged so that the conductive layer is separated into one or more not connected conductive parts that have a predetermined shape, i.e. one part that has a predetermined shape or two or more parts that might have a predetermined shape or a shape determined according to the package. The predetermined shape is preferably selected to achieve predetermined antenna characteristics with the so shaped conductive layer part(s).

Further, the package 1 comprises a chip 5, for example in the form of a RFID-element. The chip 5 is used for identification by means of radio frequency. In this embodiment, the chip 5 has the function of an identification of the package 1 to avoid a theft of the package (and preferably also its contents) in a shop. At the cashier, the chip 5 can be deactivated to avoid that a customer, who bought the package legally, will not activate an alarm when he will leave the shop with the package. However, if the package is not deactivated, an alarm will be activated, if the package is taken out of the shop.

Further, the package 1 comprises a protective layer 8 so that the electrically conductive layer 3 is arranged between the base material 2 and the protective layer 8. Furthermore, it has to be noted that the chip may be arranged in a recess provided either in the base material 2, as shown in Fig. 2, or in the protective layer 8. It is also possible that the chip 5 is so thin that no recess is necessary, but the chip 5 is only embedded within the special glue applied to bond the layers together.

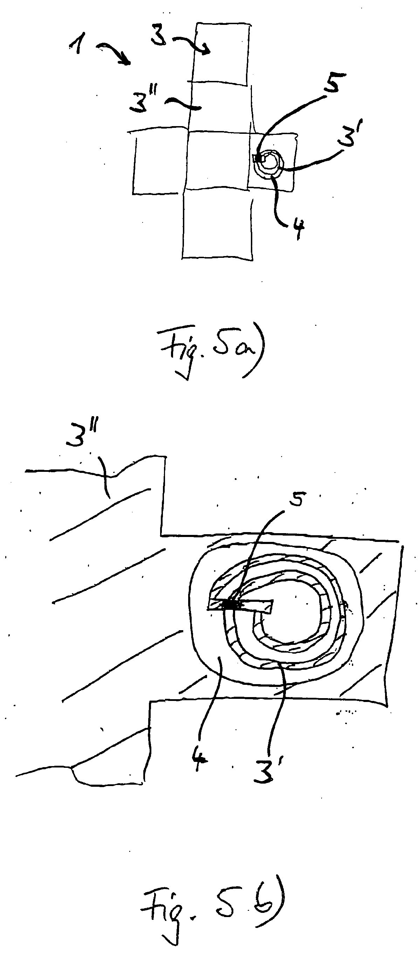

Next, referring to Fig. 3, a package 1 according to a first embodiment of the invention will be described. This package 1 is a box which is shown with a punched raw material in a not assembled state. In Fig. 3, same reference signs as used in the other figures indicate the same parts.

The package 1 according to the first embodiment uses a capacitive transfer of data and/or energy. As shown in Fig. 3, the non-conductive portion 4 is a strip like portion separating the conductive layer 3 of the package 1 into two parts 3' and 3". The non-conductive portion 4 separates the conductive layer 3 in a first direction. A chip 5 is arranged above the non-conductive portion 4 and contacts both conductive parts 3' and 3" of the conductive layer 3. The electrically conductive layer 3 shown in Fig. 3 is divided into two parts 3', 3" that might have an identical size or not. The conductive layer 3 also stays separated into two parts 3', 3" after the package 1 is fully assembled. The non-conductive portion 4 can also separate the conductive layer 3 into more than two parts, e.g. when it is designed in form of a star or of several stripes that might be connected or not.

The non-conductive portion 4 has a width of approximately 75 µm.

It has to be noted, that the non-conductive portion 4 does not have to be necessarily on a line through the centre of the package. The non-conductive portion 4 may also be arranged such that it cuts the electrically conductive layer 3 in two parts having different sizes. Furthermore, there might be also used more than one non-conductive portion 4 so that the electrically conductive layer 3 is divided in several, electrically not connected parts corresponding to the number of non-conductive portions.

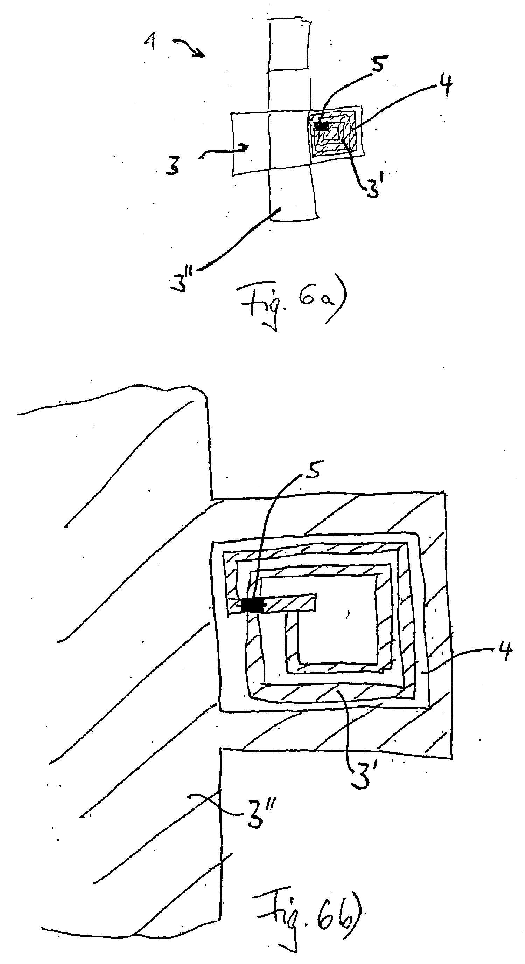

Next, referring to Fig. 4, a package 1 according to a second embodiment of the invention will be described. The package 1 of the second embodiment mainly corresponds to the package of the first embodiment and parts having the same technical function have the same reference sings as in the first embodiment. The package 1 according to the second embodiment also uses a capacitive transfer of data and/or energy.

This package 1 according to the second embodiment is a box which is shown with a punched raw material in a not assembled state. The box is generally similar to the package of the first embodiment described above, but the strip-like non conductive portion 4 is arranged in a second direction perpendicular to the first direction. The electrically conductive layer 3 shown in Fig. 4 is also divided into two parts 3', 3" that might have an identical size or not. The conductive layer 3 also stays separated into two parts 3', 3" after the package 1 is fully assembled. Also in this case, as in the other embodiments directed to a capacitive coupling, the non-conductive portion 4 can also separate the conductive layer 3 into more than two parts, e.g. when the parts used for the capacitive transfer for data and/or energy should have a predetermined size to achieve specific capacitive properties and/or in case the transfer of energy and of data should be separated, e.g. one pair of elements is used for the transfer of energy while another one is used for the transfer of data.

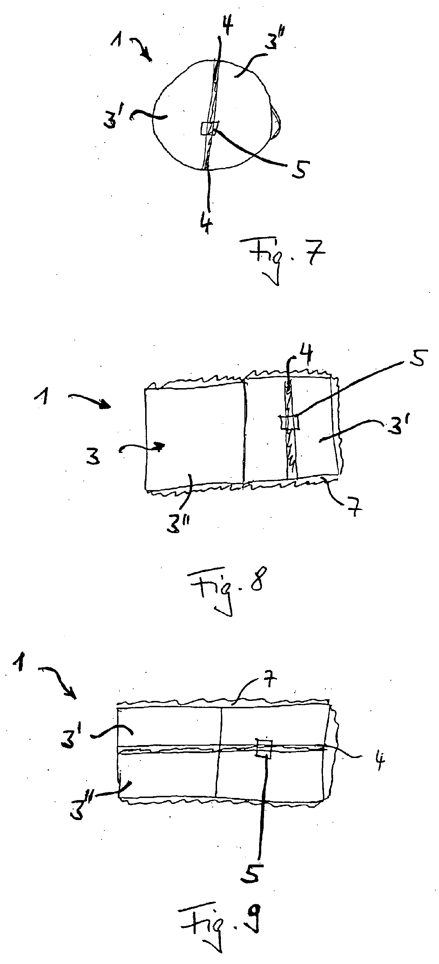

Next, referring to Figs. 5a) and 5b), a package 1 according to a third embodiment of the invention will be described. This package 1 is a box which is shown with a punched raw material in a not assembled state. In Fig. 5, same reference signs as used in the other figures indicate the same parts. Fig. 5a) shows an arrangement of the coupling element, which is a ring or coil 3' built in the conductive layer 3 by removing parts thereof, i.e. by cutting non-conductive portions 4 into the conductive layer 3, within the box. Fig. 5b) shows details of the ring or coil 3', the non-conductive portion 4 and the remaining conductive portion 3" of the conductive layer 3.

In this third embodiment, the chip 5 is fixed to the electrically conductive layer 3 and connected to both sides of an open ring-like part 3' of the conductive layer 3. As shown in Fig. 5b), the conductive layer 3 is separated into two parts 3', 3", wherein the ring-like part 3', which is surrounded by the outer part 3" and might also build several rings corresponding to a coil is used as antenna element for the chip 5. The chip 5 is arranged between two ends of the open ring-like part 3', which - in Fig. 5b) - builds a coil 3' with two windings wherein the chip 5 serves as a bridge element to enable a connection to both ends of the coil 3' without the need of a second metal layer or another bridge element. Of course, other configurations of the coil might be found that do not require a bridge element, e.g. in case both ends of the coil are wound in parallel to a helical winding and connected in the centre. The circle-like non-conductive portion 4 separates the ring-like part 3' from the surrounding part 3" of the conductive layer 3 and also builds the windings of the coil, if the ring-like part 3' has more than one winding. Thus, according to the third embodiment of the present invention, the chip 5 uses the electrically conductive layer 3 as an integrated antenna element to transfer data and/or energy to/from an external device and the look of the package is not remarkably altered.

In the third embodiment, the antenna element comprises one or more loops and is configured for an inductive transfer of data and/or energy. Thus, the antenna element (Part 3') has an open ring-like shape.

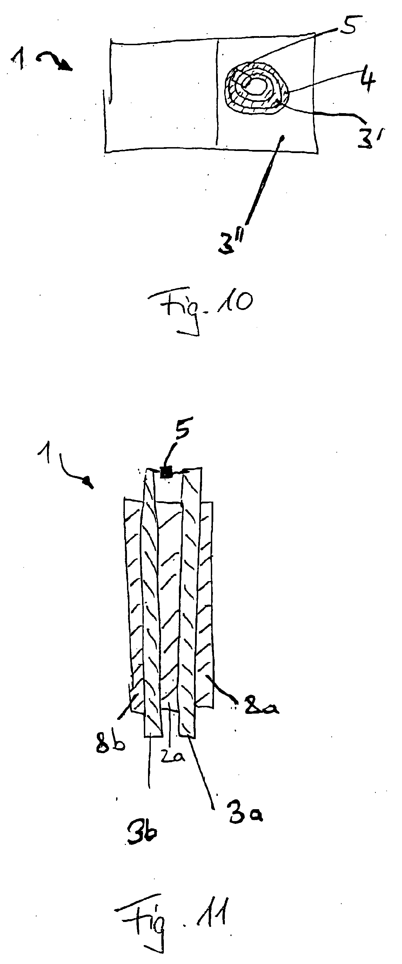

Next, referring to Figs. 6a) and 6b), a package 1 according to a fourth embodiment of the invention will be described. Figs. 6a) and 6b) are designed corresponding to Figs. 5a) and 5b). The package 1 of the fourth embodiment mainly corresponds to the package of the third embodiment and parts having the same technical function have the same reference numbers as in the first embodiment. The package of the fourth embodiment also uses an inductive transfer of data and/or energy.

This package 1 is a box which is shown with a punched raw material in a not assembled state. The box and antenna configuration is generally similar to that of the package of the third embodiment described above, but the ring-like antenna element built by the ring-like part 3' of the conductive layer 3 is replaced by a rectangular configuration, i.e. a rectangular part 3' is surrounded by an outer part 3" and separated from the outer part 3" by a non-conductive portion 4. As with the third embodiment, the antenna element built by the rectangular part 3' comprises one or more rectangular loops and is configured for an inductive transfer of data and/or energy. Thus, the antenna element (Part 3') has an open rectangular shape.

The antenna elements according to the third and fourth embodiments are arranged on one side surface of the assembled package 1.

Next, referring to Fig. 7, a package 1 according to a fifth embodiment of the invention will be described. This package 1 is a cover or lid of a container. In Fig. 7, same reference signs as used in the other figures indicate the same parts.

The package 1 according to the fifth embodiment also uses a capacitive transfer of data and/or energy, as the packages of the first and second embodiments. As shown in Fig. 7, the non-conductive portion 4 is a strip like portion separating the conductive layer 3 of the package 1 into two parts 3' and 3". The non-conductive portion 4 separates the conductive layer 3 through the centre of the round cover or lid. A chip 5 is arranged above the non-conductive portion 4 and contacts both conductive parts 3' and 3" of the conductive layer 3. The electrically conductive layer 3 shown in Fig. 7 is divided into two parts 3', 3" that might have an identical size or not. The non-conductive portion 4 does not need to pass the centre of the round cover or lid and can also separate the round cover or lid into more than two parts, e.g. when it is designed in form of a star.

Next, referring to Fig. 8, a package 1 according to a sixth embodiment of the invention will be described. This package 1 is an envelope-like metalized foil for covering CD or DVD cases. In Fig. 8, same reference signs as used in the other figures indicate the same parts.

The package 1 according to the sixth embodiment also uses a capacitive transfer of data and/or energy, as the packages of the first, second and fifth embodiments. As shown in Fig. 8, the non-conductive portion 4 is a strip like portion separating the conductive layer 3 of the package 1 into two parts 3' and 3". The non-conductive portion 4 separates the conductive layer 3 through the centre of one half of the envelope-like foil, which is shown in a state wherein its two halves are not bonded together at their bonding flaps 7, from one edge to the opposite edge. A chip 5 is arranged above the non-conductive portion 4 and contacts both conductive parts 3' and 3" of the conductive layer 3. The electrically conductive layer 3 shown in Fig. 7 is divided into two parts 3', 3" not having an identical size. These two parts 3', 3" can also be designed to have an identical size.

Next, referring to Fig. 9, a package 1 according to a seventh embodiment of the invention will be described. This package 1 is also an envelope-like metalized foil for covering CD or DVD cases. In Fig. 9, same reference signs as used in the other figures indicate the same parts.

The package 1 according to the seventh embodiment also uses a capacitive transfer of data and/or energy, as the packages of the first, second, fifth and sixth embodiments. As shown in Fig. 8, the non-conductive portion 4 is a strip like portion separating the conductive layer 3 of the package 1 into two parts 3' and 3". The non-conductive portion 4 separates the conductive layer 3 through the centre of both halves of the envelope-like foil from one edge to the opposite edge. The non-conductive portion 4 does not need to pass the centre of both halves of the envelope-like foil and can also separate the envelope-like foil into more than two parts, e.g. when it is designed in form of several connected or not connected stripes. As in Fig. 8, also in this case the envelope-like foil for covering CD or DVD cases is shown in a state wherein its two halves are not bonded together at their bonding flaps 7A. Further, a chip 5 is arranged above the non-conductive portion 4 and contacts both conductive parts 3' and 3" of the conductive layer 3. The electrically conductive layer 3 shown in Fig. 7 is divided into two parts 3', 3" that might have an identical size or not.

Next, referring to Fig. 10, a package 1 according to an eighth embodiment of the invention will be described. This package 1 is also an envelope-like metalized foil for covering CD or DVD cases. In Fig. 10, same reference signs as used in the other figures indicate the same parts. Fig. 10 corresponds to Fig. 5a) and shows the arrangement of the coupling element, which is a ring or coil 3' built in the conductive layer 3 by removing parts thereof, i.e. by cutting non-conductive portions 4 into the conductive layer 3, on or within the envelope-like metalized foil. The details of the ring or coil 3', the non-conductive portion 4 and the remaining conductive portion 3" of the conductive layer 3 shown in Fig. 5b) also apply to this eighth embodiment.

In this eighth embodiment, the chip 5 is fixed to the electrically conductive layer 3 and connected to an open ring-like part 3' of the conductive layer 3, as in the third embodiment described above and in particular shown in detail and described in connection with Fig. 5b). Here, the ring-like part 3', which is surrounded by the outer part 3" and might also build several rings corresponding to a coil and is used as antenna element for the chip 5, is arranged on one half of the envelope-like foil. Therefore, the package 1 according to the eighth embodiment also uses an inductive transfer of data and/or energy, as the packages of the third and fourth embodiments.

Next, referring to Fig. 11, a further package or package raw material according to the invention will be described. In contrast to the package or package raw material shown and described in connection with Fig. 2, this further package or package raw material comprises not only one conductive layer 3 , which is divided into several parts 3', 3" by a non-conductive portion 4, but this further package or package raw material comprises two conductive layers 3a, 3b. A first electrically conductive layer 3a is applied on a first surface of the base material 2 and a second electrically conductive layer 3b is applied on a second surface of the base material 2. The electrically conductive layers 3a, 3b and the base material 2 form the package 1 that might be a package of a CD or a DVD or a Blu-ray package or a food package such as a beverage box or the like, or a part of such packages, such as a cap or a lid, as in case of the package or package raw material shown in Fig. 2.

Further, the package 1 comprises a chip 5 having the functionality of that described above in connection with Fig. 2, which is arranged to connect to both electrically conductive layers to provide a capacitive transfer of data and/or energy without having to provide a non-conductive portion 4.

Further, as also possible with the package or package raw material shown in Fig. 2, the package 1 might comprise a protective layer arranged on the side of the electrically conductive layer that is not arranged on the base material; in this case, the package 1 comprises a first protective layer 8a that is arranged on the first electrically conductive layer 3a and a second protective layer 8b that is arranged on the second electrically conductive layer 3b.

Furthermore, it has to be noted that the chip may be arranged in a recess provided in the base material 2, as shown in Fig. 2.

The first to eighth embodiments of the invention might be combined in any way, e.g. to achieve a separation of the transfer of energy and the transfer of data. In this way it is also possible to use one of the inductive coupling technology and the capacitive coupling technology for the transfer of energy and the other one for the transfer of data.

Further, the first to eighth embodiments of the invention or their combinations might be realized with either one of the package raw materials shown in cross section in Figs. 2 and 11. There might also be packages that comprise one electrically conductive layer at one portion thereof and two or even more electrically conductive layers on another portion thereof. Of course, it is also possible to design other packages with the package raw materials of the invention.

Thus, according to the present invention, no separate additional antenna element is necessary, since the yet existing electrically conductive layer 3 is used as antenna element. Therefore, the production costs of a package 1 according to the present invention can be significantly reduced. Furthermore, the number of parts can be reduced and the package has a simple structure.

The non-conductive portion 4 can be made for example by means of a laser, after the electrically conductive layer has been applied on the base material. Alternatively, as described above, a rotary or flat die cutter might be used to produce the non-conducting portion 4. After the non-conductive portion 4 has been formed, the chip 5 is fixed to the electrically conductive layer 3 thus that the chip 5 uses one or more loops of the conductive layer as a ring-like inductive antenna element or two parts of the conductive layer as capacitive antenna elements. The capacitive antenna elements might also be arranged in several layers of a multi-layer package or package raw material.

It has to be further noted, that according to the present invention the non-conductive portion of all described embodiments may be provided by means of a laser, a mask technique, adhesive strips, a wire or a thread which are provided before the applying of the electrically conductive layer and are then removed.

Further, the capacitive and inductive antenna elements formed by removing the non-conductive portion 4 from the conductive layer 3 might have arbitrary shapes so as to suit the information and/or energy transfer needs of the respective transponder chip used for the transfer of information.

## Claims

1. Package or package raw material comprising an electrically conductive layer (3) arranged on a base material (2), **characterized by** a chip (5) connected to the electrically conductive layer (3), wherein the electrically conductive layer (3) is configured as an antenna element for transferring data and/or energy and comprises at least one non-conductive portion (4).

2. Package or package raw material according to claim 1, **characterized in that** the transfer of data and/or energy is an inductive transfer.

3. Package or package raw material according to anyone of the preceding claims, **characterized in that** the antenna element formed by the electrically conductive layer (3) has basically the shape of an open ring (3').

4. Package or package raw material according to claim 1, **characterized in that** the transfer of data and/or energy is a capacitive transfer, wherein the electrically conductive layer (3) is separated by the non-conductive portion into at least two parts.

5. Package or package raw material according to claim 4, **characterized in that** the non-conductive portion has a closed ring-like shape and separates the electrically conductive layer (3) into two closed ring-like parts.

6. Package or package raw material according to claim 4, **characterized in that** the electrically conductive layer (3) comprises a line-like non-conductive portion separating the electrically conductive layer from an edge to an opposite edge, wherein the line-like non-conductive portion is arranged for separating the electrically conductive layer (3) into two parts (3', 3").

7. Package or package raw material according to anyone of the preceding claims, **characterized in that** the chip (5) is connected to the electrically conductive layer (3) by means of a conductive adhesive.

8. Package or package raw material according to anyone of the preceding claims comprising a first electrically conductive layer (3a) and a second electrically conductive layer (3b), wherein the second electrically conductive layer (3b) is arranged parallel to the first electrically conductive layer (3a) and wherein the first and/or the second electrically conductive layer (3a, 3b) are configured as an antenna element for transferring data and/or energy.

9. Package or package raw material according to anyone of the preceding claims, **characterized in that** the non-conductive portion (4) has a width of less than 300 µm, preferably less than 100 µm, more preferably approximately 75 µm.

10. Package or package raw material according to anyone of the preceding claims, **characterized in that** the chip (5) is a RFID-element.

11. Method for producing a package or package raw material comprising an electrically conductive layer (3) arranged on a base material (2), comprising the steps of:
a) applying a metal material on the base material (2) for providing the electrically conductive layer (3),
b) removing metal material of the electrically conductive layer (3) for providing at least one non-conductive portion (4) in the electrically conductive layer (3), and
c) fixing a chip (5) to the electrically conductive layer (3), preferably by means of a conductive adhesive.

12. Method for producing a package or package raw material comprising an electrically conductive layer (3) arranged on a base material (2), comprising the steps of:
a removing metal material of an electrically conductive film (3) for providing at least one non-conductive portion (4) in the electrically conductive film (3),
b applying the electrically conductive film (3) with the at least one non-conductive portion (4) on the base material (2) for providing the electrically conductive layer (3),and
c) fixing a chip (5) to the electrically conductive layer (3), preferably by means of a conductive adhesive.

13. Method according to claim 11 or 12, **characterized in that** the metal material for providing the non-conductive portion (4) is removed by means of a laser or a flat or rotary die cutter.

14. Method according to claim 11 or 12, **characterized in that** before the step of applying the metal material for the electrically conductive layer (3) a line-like auxiliary element is arranged on the base material (2), wherein the line-like auxiliary element is removed after the applying of the metal material for forming the non-conductive portion (4) of the electrically conductive layer (3).

15. Method according to claim 14, **characterized in that** the line-like auxiliary element is a wire or a thread or an adhesive strip.

16. Device for producing a package or package raw material, comprising means for applying a electrically conductive layer (3) on a base material (2), **characterized by** means for partly removing the electrically conductive layer (3) from the base material (2) or means for removing parts of a metal film that forms the electrically conductive layer (3) before being applied to the base material (2) for forming at least one non-conductive portion (4).

17. Device according to claim 16, **characterized in that** the means for partly removing the electrically conductive layer is a laser or a flat or rotary die cutter.

18. Device according to claim 16, **characterized in that** the means for partly removing the electrically conductive layer is a line-like auxiliary element, which can be removed after applying the electrically conductive layer on the base layer.

19. Device according to claim 18, **characterized in that** the line-like auxiliary element is a wire or a thread or an adhesive tape.
